# EUROPEAN PATENT APPLICATION

(11) **EP 3 643 529 A1**
(43) Date of publication of application: **29.04.2020**
(21) Application number: 18820287.3
(22) Date of filing: 22.05.2018
(51) Int. Cl.: B60C 15/04, B29D 30/48

(54) **BEAD CORE, PRODUCTION METHOD THEREFOR, AND PNEUMATIC TIRE**

(30) Priority: 19.06.2017 JP 2017119972
(71) Applicant: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2018/019717
(87) International publication number: WO 2018/235507

(57) **Abstract**

A bead core of the present disclosure is an annular bead core configured in a state where one or more bead wires are wound a plurality of times, a cross-sectional shape of the bead wire is non-circular, in axial cross-sectional view of the bead core, the bead wire is formed in a plurality of columns in an axial direction of the bead core and a plurality of stacks in a radial direction of the bead core, and in the axial cross-sectional view of the bead core, the bead wire has a periphery coated with a resin material, and the resin material is interposed between the bead wires. A manufacturing method of the bead core of the present disclosure is a manufacturing method to obtain the above bead core, comprising: a winding step of winding a plurality of times one or more resin-coated wires each comprising a bead wire having a non-circular cross-sectional shape and being coated with a resin material so that a plurality of columns in an axial direction and a plurality of stacks in a radial direction are formed in axial cross-sectional view of the obtainable bead core, and a joining step of joining the resin materials of the adjacently wound resin-coated wires to each other. A pneumatic tire of the present disclosure comprises a pair of bead portions, and the above bead core in each of the pair of bead portions.

## Description

### TECHNICAL FIELD

The present disclosure relates to a bead core, a manufacturing method of the bead core, and a pneumatic tire.

### BACKGROUND

A bead core to be embedded in a bead portion of a pneumatic tire can be formed, for example, by continuously winding a bead wire about a predetermined axis.

Here, in a case where the bead core is formed using the bead wire as described above, the bead wire easily rotates around the axis against a twist force around the axis of the bead wire (in an extending direction of the bead wire). Furthermore, adjacent bead wires in a cross section of the formed bead core come in point contact with each other via a coating resin. Consequently, in particular, when a shearing force is generated in the bead core during generation of a large lateral force, the bead core may have a collapsed shape. Therefore, in a conventional technology, there is room for improvement of a shape retaining property of the bead core and improvement of a steering stability of a tire.

On the other hand, it is suggested, for example, in Patent Literature 1 that a fixed portion formed by winding a steel wire or the like in a direction orthogonal to a bead wire is provided in at least one region of an annular body that forms a bead core in a circumferential direction, to increase a binding force between the bead wires and to acquire a shape retaining property of the bead core.

### CITATION LIST

### Patent Literature

PTL 1: Japanese Patent Laid-Open No. 2009-190552

### SUMMARY

### (Technical Problem)

In the above described technique, however, a region having such a fixed portion as described above and a region that does not have the above fixed portion are formed on a circumference of a bead core, thereby causing a problem that uniformity in a circumferential direction of a tire lowers.

To solve the problem, it is an object of the present disclosure to provide a bead core that does not impair uniformity in a circumferential direction of a tire when incorporated in the tire and that has an excellent shape retaining property, and a manufacturing method of the bead core. Furthermore, it is also an object of the present disclosure to provide a pneumatic tire that improves a steering stability without impairing the uniformity in the circumferential direction.

### (Solution to Problem)

A gist configuration of the present disclosure is as follows.

A bead core of the present disclosure is an annular bead core configured in a state where one or more bead wires are wound a plurality of times, wherein a cross-sectional shape of the bead wire is non-circular,
in axial cross-sectional view of the bead core, the bead wire is formed in a plurality of columns in an axial direction of the bead core and a plurality of stacks in a radial direction of the bead core, and
in the axial cross-sectional view of the bead core, the bead wire has a periphery coated with a resin material, and the resin material is interposed between the bead wires.

A manufacturing method of a bead core of the present disclosure is a manufacturing method of a bead core to obtain the above bead core, comprising:
a winding step of winding a plurality of times one or more resin-coated wires each comprising a bead wire having a non-circular cross-sectional shape and being coated with a resin material so that a plurality of columns in an axial direction and a plurality of stacks in a radial direction are formed in axial cross-sectional view of the obtainable bead core, and
a joining step of joining the resin materials of the adjacently wound resin-coated wires to each other.

A pneumatic tire of the present disclosure comprises a pair of bead portions, and the above bead core in each of the pair of bead portions.

### (Advantageous Effect)

According to the present disclosure, there can be provided a bead core that does not impair uniformity in a circumferential direction of a tire when incorporated in the tire, and that has an excellent shape retaining property, and a manufacturing method of the bead core. Furthermore, according to the present disclosure, there can be provided a pneumatic tire having an improved steering stability without impairing uniformity in a circumferential direction.

### BRIEF DESCRIPTION OF THE DRAWINGS

In the accompanying drawings:
FIG. 1 is a schematic partially cross-sectional view in a tire width direction, illustrating a tire widthwise half portion of a pneumatic tire including, in each bead portion, a bead core according to a first embodiment of the present disclosure;
FIG. 2 is an enlarged view of the bead portion of the pneumatic tire of FIG. 1;
FIG. 3 is an axial cross-sectional view of the bead core according to the first embodiment of the present disclosure;
FIG. 4 is a partially transparent perspective view of a bead wire and a resin material that coats the bead wire;
FIG. 5 is an axial cross-sectional view of a bead core according to a second embodiment of the present disclosure;
FIG. 6 is an axial cross-sectional view of a bead core according to a third embodiment of the present disclosure;
FIG. 7 is an axial cross-sectional view of a bead core according to a fourth embodiment of the present disclosure;
FIG. 8 is an axial cross-sectional view of a bead core according to a fifth embodiment of the present disclosure;
FIG. 9 is an axial cross-sectional view of a bead core according to a sixth embodiment of the present disclosure;
FIG. 10 is an axial cross-sectional view of a bead core according to a seventh embodiment of the present disclosure;
FIG. 11 is an axial cross-sectional view of a bead core according to an eighth embodiment of the present disclosure;
FIG. 12 is an axial cross-sectional view of a bead core according to a ninth embodiment of the present disclosure;
FIG. 13 is an axial cross-sectional view of a bead core according to a tenth embodiment of the present disclosure;
FIG. 14 is an axial cross-sectional view of a bead core according to an eleventh embodiment of the present disclosure;
FIG. 15 is an axial cross-sectional view of a bead core according to a twelfth embodiment of the present disclosure; and
FIG. 16 is a schematic side view to explain an annular body that forms a bead core in an example of the present disclosure.

### DETAILED DESCRIPTION

Hereinafter, embodiments of the present disclosure will be illustrated and described in detail with reference to the drawings.

### <Pneumatic Tire>

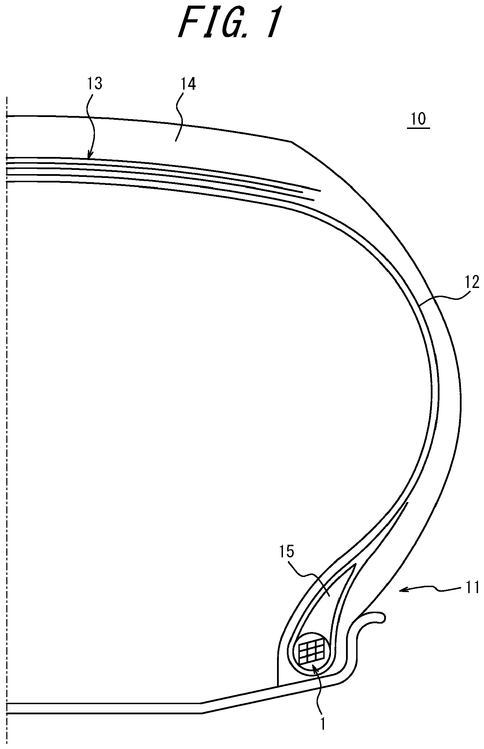

FIG. 1 is a schematic partially cross-sectional view in a tire width direction, illustrating a tire widthwise half portion of a pneumatic tire including, in each bead portion, a bead core according to a first embodiment of the present disclosure. FIG. 1 only illustrates one tire widthwise half portion via a tire equatorial plane CL as a boundary, and omits depiction of the other half portion. However, the other half portion also has a similar configuration. A pneumatic tire 10 of this embodiment (hereinafter referred to simply as the tire) comprises a belt 13 comprising one or more belt layers (three belt layers in an illustrated example), and a tread portion 14 in order outside a crown portion of a carcass 12 that toroidally straddles a bead core 1 embedded in each of a pair of bead portions 11, in a tire radial direction.

In the illustrated example, the carcass 12 comprises a carcass ply made of organic fibers, but there are not any special restrictions on a material and a number of carcass plies.

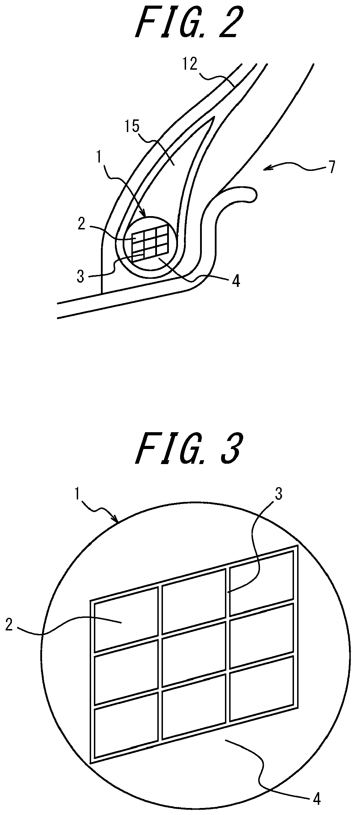

FIG. 2 is an enlarged view of the bead portion of the pneumatic tire of FIG. 1. In the example illustrated in FIG. 1 and FIG. 2, the tire includes a bead filler 15 outside the bead core 1 in the tire radial direction. In this example, the bead filler 15 has a triangular cross-sectional shape, and has a width in the tire width direction which gradually decreases outwardly from inside in the tire radial direction. The bead filler 15 may be made of a material such as a rubber or a resin. Furthermore, the bead filler 15 made of a resin material may have a hardness that is larger than, smaller than or the same as a hardness of an after-mentioned bead core coating resin 4.

### <Bead Core>

FIG. 3 is an axial cross-sectional view of the bead core according to the first embodiment of the present disclosure. Note that "an axial cross section of the bead core" described herein is a cross section formed by a plane including a central axis of the bead core. Furthermore, "an axial direction of the bead core" is a central axis direction of the bead core or a direction parallel to the central axis. The bead core 1 is an annular bead core 1 configured in a state where one or more (one in the illustrated example) bead wires 2 are wound a plurality of times, and have a periphery coated with the bead core coating resin 4.

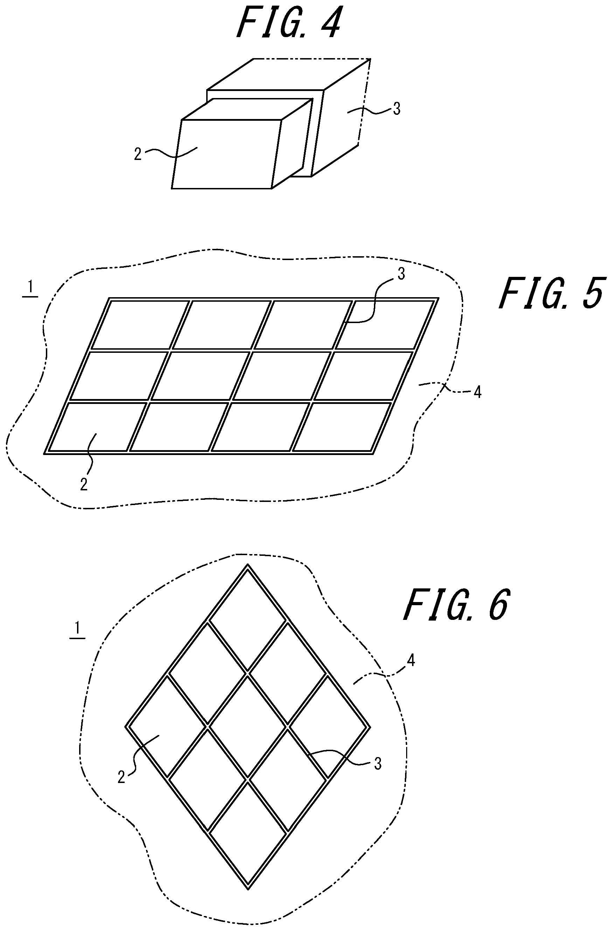

In the first embodiment illustrated in FIG. 3, in the bead wire 2, an arbitrary known material can be used, and, for example, a steel cord can be used. The steel cord can comprise, for example, a steel monofilament or a stranded wire. Note that this also applies to after-mentioned second to twelfth embodiments illustrated in FIG. 5 to FIG. 15. Furthermore, in the bead wire 2, organic fibers, carbon fibers or the like may be used.

Additionally, in a resin material 3, for example, a thermoplastic elastomer or a thermoplastic resin can be used, or a resin that crosslinks by heat or an electron beam or a resin that cures by thermal dislocation can be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, a resin can be used in which, for example, a deflection temperature under load (under a load of 0.45 MPa) prescribed in IS075-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the resin material 3 that coats the bead wire 2 has a tensile elastic modulus (prescribed in JIS K7113: 1995) of 50 MPa or more. Furthermore, it is preferable that the tensile elastic modulus of the resin material 3 that coats the bead wire 2 is 1000 MPa or less. Note that this also applies to the after-mentioned second to twelfth embodiments illustrated in FIG. 5 to FIG. 15. Note that the resin material described herein does not contain any rubbers (any organic polymer materials that exhibit a rubber elasticity at normal temperature).

In the first embodiment, as illustrated in FIG. 3, in axial cross-sectional view of the bead core 1, the bead wire 2 is formed in a plurality of columns (three columns in an illustrated example) in an axial direction of the bead core 1 and in a plurality of stacks (three stacks in the illustrated example) in a radial direction of the bead core 1. Furthermore, as illustrated in FIG. 3, a cross-sectional shape of the bead wire 2 is non-circular, and is quadrangular (a parallelogram) in this example. The cross-sectional shape of the bead core 1 as a whole is also a parallelogram.

FIG. 4 is a partially transparent perspective view of the bead wire and the resin material that coats the bead wire.

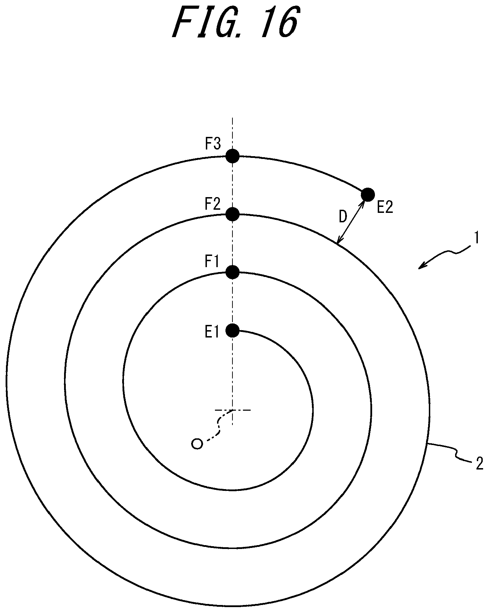

In the first embodiment, as illustrated in FIG. 3 and FIG. 4, in the axial cross-sectional view of the bead core 1, the bead wire 2 has a periphery coated with the resin material 3. That is, in a case where the bead wire 2 orbits once and a portion that appears in this cross-sectional view is an orbital portion (e.g., a point F1, a point F2, or a point F3 of FIG. 16), in a cross section illustrated in FIG. 3, each of orbital portions of the bead wire 2 (3 columns × 3 stacks = 9 orbital portions in an illustrated example) has a periphery coated with the resin material 3, and the resin material 3 is interposed between (the orbital portions of) the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). The (orbital portions of) bead wires 2 adjacent in the axial direction and the radial direction of the bead core 1 are joined to each other, for example, by welding (e.g., heat welding) or bonding the surrounding resin materials 3 to each other. Note that manufacturing methods of the bead cores according to the first to twelfth embodiments illustrated in FIG. 1 to FIG. 15 will be described later.

As illustrated in FIG. 3, the bead core 1 is obtainable by further coating, with the bead core coating resin 4, the periphery of the bead wire 2 coated with the resin material 3. As the bead core coating resin 4, a resin that is the same as or different from the resin material 3 may be used. The resin material 3 may have a hardness that is larger than, smaller than or equal to a hardness of the bead core coating resin 4.

FIG. 5 is an axial cross-sectional view of a bead core according to a second embodiment of the present disclosure. The second embodiment is different from the first embodiment in that a bead core 1 is formed of four columns of a bead wire 2. Similarly to the first embodiment, a cross-sectional shape of the bead core 1 as a whole is a parallelogram. Note that FIG. 5 illustrates a bead core coating resin 4 with a two-dot chain line. Similarly to the first embodiment, an entire wound body of the bead wire 2 coated with a resin material 3 is covered with an outline having a circular cross section. This also applies to the third to twelfth embodiments.

FIG. 6 is an axial cross-sectional view of a bead core according to a third embodiment of the present disclosure. A bead core 1 of this embodiment is the annular bead core 1 configured in a state where one or more (one in an illustrated example) bead wires 2 are wound a plurality of times and have a periphery coated with a bead core coating resin 4. In this example, a cross-sectional shape of the bead wire 2 is rhombic. The bead wire 2 is formed in five columns in an axial direction of the bead core 1. Among the five columns, a central column is formed in three stacks in a radial direction, and each of both end columns is formed in one stack in the radial direction. Furthermore, each of two intermediate columns between the central column and both the end columns is formed in two stacks in the radial direction. A cross-sectional shape of the bead core 1 as a whole is rhombic. As illustrated in FIG. 6, in axial cross-sectional view of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction (also in the radial direction) of the bead core 1 has a thickness in the axial direction (the radial direction) that is almost constant in at least a part of a superimposed region (all the region in the illustrated example). The bead wires 2 adjacent in the axial direction of the bead core 1 are joined to each other, for example, by welding (e.g., heat welding) or bonding the surrounding resin materials 3 to each other.

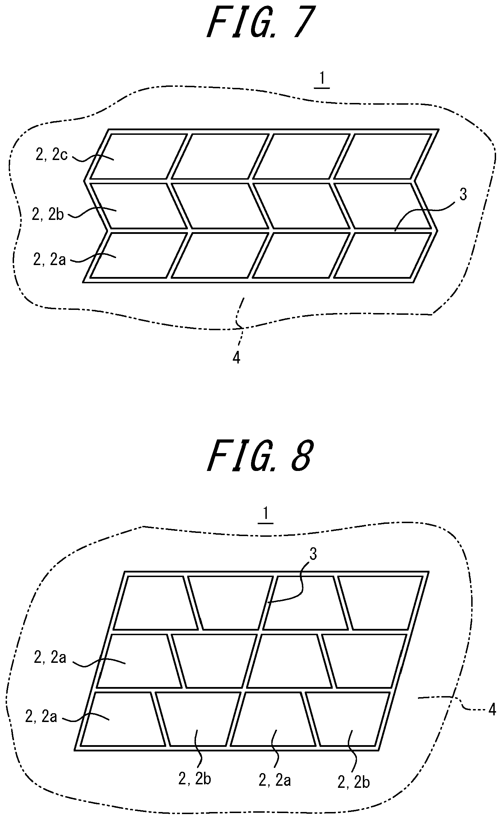

FIG. 7 is an axial cross-sectional view of a bead core according to a fourth embodiment of the present disclosure. A bead core 1 of this embodiment is the annular bead core 1 configured in a state where one or more (three in an illustrated example) bead wires 2 are wound a plurality of times, respectively, and have a periphery coated with a bead core coating resin 4. In this example, a cross-sectional shape of the bead wire 2 is a parallelogram. As illustrated in FIG. 7, the bead wire 2 is formed in a plurality of columns (four columns in the illustrated example) in an axial direction of the bead core 1 and in a plurality of stacks (three stacks in the illustrated example) in a radial direction. As illustrated in FIG. 7, a cross-sectional shape of the bead wires 2 of the first and third stacks is a first parallelogram, and a cross-sectional shape of the bead wire 2 of the second stack is a second parallelogram that is a shape linearly symmetric with the above first parallelogram. As illustrated in FIG. 7, in cross-sectional view including an axis of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). In this example, the bead core 1 has a state where three bead wires 2 are wound, and the first stack, the second stack and the third stack comprise separate bead wires 2a, 2b, and 2c, respectively. The bead wires 2a, 2b, and 2c (orbital portions thereof) are joined to one another, for example, by welding (e.g., heat welding) or bonding the surrounding resin materials 3 to each other in the radial direction of the bead core 1 in the first stack and the second stack, and the second stack and the third stack. In a set of bead wires 2, the bead wires 2 (the orbital portions thereof) adjacent in the axial direction of the bead core 1 are joined to each other, for example, by welding (e.g., heat welding) or bonding the surrounding resin materials 3 to each other. Note that the bead core illustrated in FIG. 7 may have a configuration where six bead wires 2 are used, and each stack comprises two bead wires 2.

FIG. 8 is an axial cross-sectional view of a bead core according to a fifth embodiment of the present disclosure. A bead core 1 of this embodiment is the annular bead core 1 configured in a state where one or more (two in an illustrated example) bead wires 2 are wound a plurality of times, respectively, and have a periphery coated with a bead core coating resin 4. In this example, a cross-sectional shape of the bead wire 2 is trapezoidal (an isosceles trapezoid in the illustrated example). In this example, the bead core 1 is configured in a state where two bead wires 2 are wound. That is, the bead core 1 is configured in a state where a bead wire 2a having a cross-sectional shape of a first trapezoid and a bead wire 2b having a second trapezoid that is linearly symmetric with the shape of the bead wire 2a in this cross-sectional view are wound. In this example, the bead wire 2 is formed in a plurality of columns (four columns in the illustrated example) in an axial direction of the bead core 1 and in a plurality of stacks (three stacks in the illustrated example) in a radial direction. In other words, a set of the bead wire 2a and the bead wire 2b that are adjacent in the axial direction of the bead core 1 is formed in two columns in the axial direction and three stacks in the radial direction. As illustrated in FIG. 8, in axial cross-sectional view of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). A cross-sectional shape of the whole bead core 1 is a parallelogram. The bead wires 2 adjacent in the axial direction and radial direction of the bead core 1 are joined to each other, for example, by welding (e.g., heat welding) or bonding the surrounding resin materials 3 to each other. Note that the bead core 1 illustrated in FIG. 8 may have a configuration where four bead wires 2 are used in each column and are wound to be stacked.

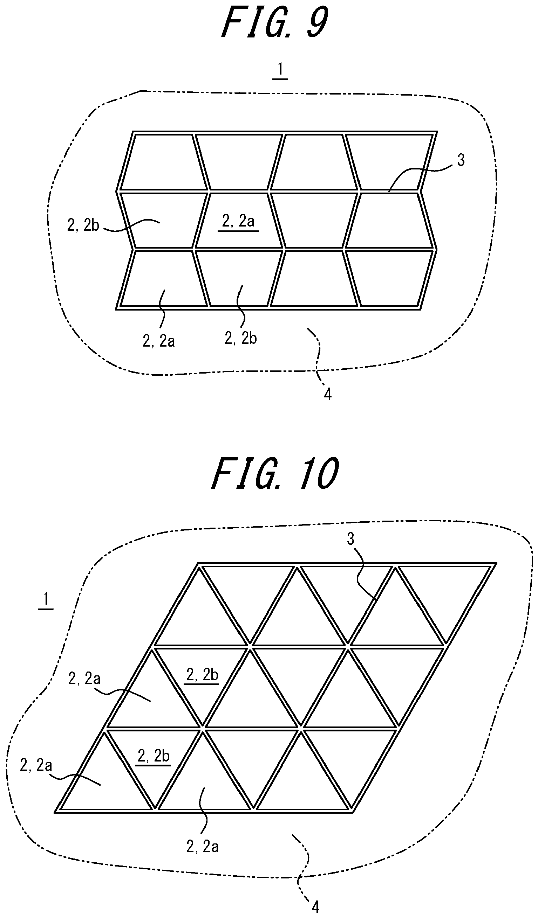

FIG. 9 is an axial cross-sectional view of a bead core according to a sixth embodiment of the present disclosure. A bead core 1 of this embodiment is the annular bead core 1 configured in a state where one or more (six in an illustrated example) bead wires 2 are wound a plurality of times, respectively, and have a periphery coated with a bead core coating resin 4. In this example, a cross-sectional shape of the bead wire 2 is a trapezoid (an isosceles trapezoid in the illustrated example). In this example, the bead core 1 is configured in a state where six bead wires 2 are wound. That is, the bead core 1 is configured in a state where a bead wire 2a having a cross-sectional shape of a first trapezoid and a bead wire 2b having a second trapezoid that is linearly symmetric with the shape of the bead wire 2a in this cross-sectional view are wound. In this example, the bead wire 2 is formed in a plurality of columns (four columns in the illustrated example) in an axial direction of the bead core 1 and in a plurality of stacks (three stacks in the illustrated example) in a radial direction. In other words, a set of the bead wire 2a and the bead wire 2b that are adjacent in the axial direction of the bead core 1 is formed in two columns in the axial direction and three stacks in the radial direction. As illustrated in FIG. 9, in axial cross-sectional view of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). In this example, the bead core 1 is configured in a state where six bead wires 2 are wound. That is, in this example, a first stack, a second stack and a third stack comprise separate sets each comprising the bead wire 2a and the bead wire 2b that are adjacent in the axial direction of the bead core 1. The sets of bead wires 2 are joined to each other, for example, by welding (e.g., heat welding) or bonding the surrounding resin materials 3 to each other in the radial direction of the bead core 1 in the first stack and the second stack, and the second stack and the third stack. In the set of bead wires 2, the bead wires 2 (orbital portions thereof) adjacent in the axial direction of the bead core 1 are joined to each other, for example, by welding (e.g., heat welding) or bonding the surrounding resin materials 3 to each other. The bead wires 2 adjacent in the axial direction and radial direction of the bead core 1 are also joined to each other, for example, by welding (e.g., heat welding) or bonding the surrounding resin materials 3 to each other.

FIG. 10 is an axial cross-sectional view of a bead core according to a seventh embodiment of the present disclosure. A bead core 1 of this embodiment is the annular bead core 1 configured in a state where one or more (two in an illustrated example) bead wires 2 are wound a plurality of times, respectively, and have a periphery coated with a bead core coating resin 4. In this example, a cross-sectional shape of the bead wire 2 is a triangle (an equilateral triangle in the illustrated example). In this example, the bead core 1 is configured in a state where two bead wires 2 are wound. That is, the bead core 1 is configured in a state where a bead wire 2a having a cross-sectional shape of a first triangle and a bead wire 2b having a second triangle that is linearly symmetric with the shape of the bead wire 2a in this cross-sectional view are wound. In this example, the bead wire 2 is formed in a plurality of columns (six columns in the illustrated example) in an axial direction of the bead core 1 and in a plurality of stacks (three stacks in the illustrated example) in a radial direction. In other words, a set of the bead wire 2a and the bead wire 2b that are adjacent in the axial direction of the bead core 1 is formed in three columns in the axial direction and three stacks in the radial direction. As illustrated in FIG. 10, in axial cross-sectional view of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). The bead wires 2 adjacent in the axial direction and the radial direction of the bead core 1 are joined to each other, for example, by welding (e.g., heat welding) or bonding the surrounding resin materials 3 to each other. A cross-sectional shape of the whole bead core 1 is a parallelogram. Note that the bead core 1 illustrated in FIG. 10 may have, for example, a configuration where six bead wires 2 adjacent in the axial direction of the bead core 1 are stacked in the radial direction while shifting as much as one column in the axial direction.

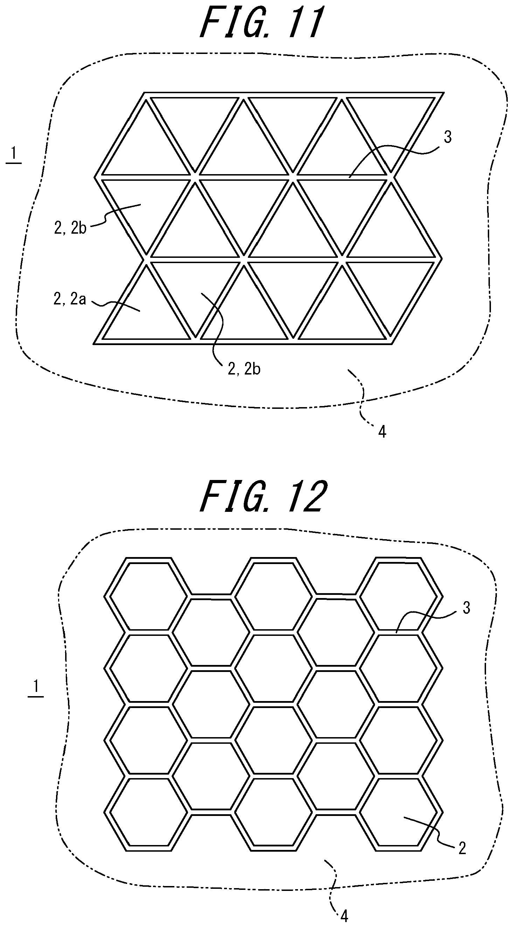

FIG. 11 is an axial cross-sectional view of a bead core according to an eighth embodiment of the present disclosure. A bead core 1 of this embodiment is the annular bead core 1 configured in a state where one or more (six in an illustrated example) bead wires 2 are wound a plurality of times, respectively, and have a periphery coated with a bead core coating resin 4. In this example, a cross-sectional shape of the bead wire 2 is a triangle (an equilateral triangle in the illustrated example). In this example, the bead core 1 is configured in a state where six bead wires 2 are wound. That is, the bead core 1 is configured in a state where a bead wire 2a having a cross-sectional shape of a first triangle and a bead wire 2b having a second triangle that is linearly symmetric with the shape of the bead wire 2a in this cross-sectional view are wound. In this example, the bead wire 2 is formed in a plurality of columns (six columns in the illustrated example) in an axial direction of the bead core 1 and in a plurality of stacks (three stacks in the illustrated example) in a radial direction. As illustrated in FIG. 11, in axial cross-sectional view of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). In this example, a first stack, a second stack and a third stack comprise separate sets each comprising the bead wire 2a and bead wire 2b that are adjacent in the axial direction of the bead core 1, and the sets of bead wires 2 are joined to each other, for example, by welding (e.g., heat welding) or bonding the surrounding resin materials 3 to each other in the radial direction of the bead core 1 in the first stack and the second stack, and the second stack and the third stack. In the set of bead wires 2, the bead wires 2 (orbital portions thereof) adjacent in the axial direction of the bead core 1 are joined to each other, for example, by welding (e.g., heat welding) or bonding the surrounding resin materials 3 to each other. The bead wires 2 adjacent in the axial direction and radial direction of the bead core 1 are also joined to each other, for example, by welding (e.g., heat welding) or bonding the surrounding resin materials 3 to each other.

FIG. 12 is an axial cross-sectional view of a bead core according to a ninth embodiment of the present disclosure. A bead core 1 of this embodiment is the annular bead core 1 configured in a state where one or more (one in an illustrated example) bead wires 2 are wound a plurality of times, and have a periphery coated with a bead core coating resin 4. In this example, a cross-sectional shape of the bead wire 2 is a regular hexagon. In this example, the bead wire 2 is formed in a plurality of columns in an axial direction of the bead core 1 and in a plurality of stacks in a radial direction. In this example, the bead wire 2 is formed in five columns in the axial direction of the bead core 1, and formed in four stacks in a central column and both end columns and in three stacks in respective intermediate columns between the central column and both the end columns. As illustrated in FIG. 12, in axial cross-sectional view of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). The bead wires 2 adjacent in the axial direction and radial direction of the bead core 1 are joined to each other, for example, by welding (e.g., heat welding) or bonding the surrounding resin materials 3 to each other.

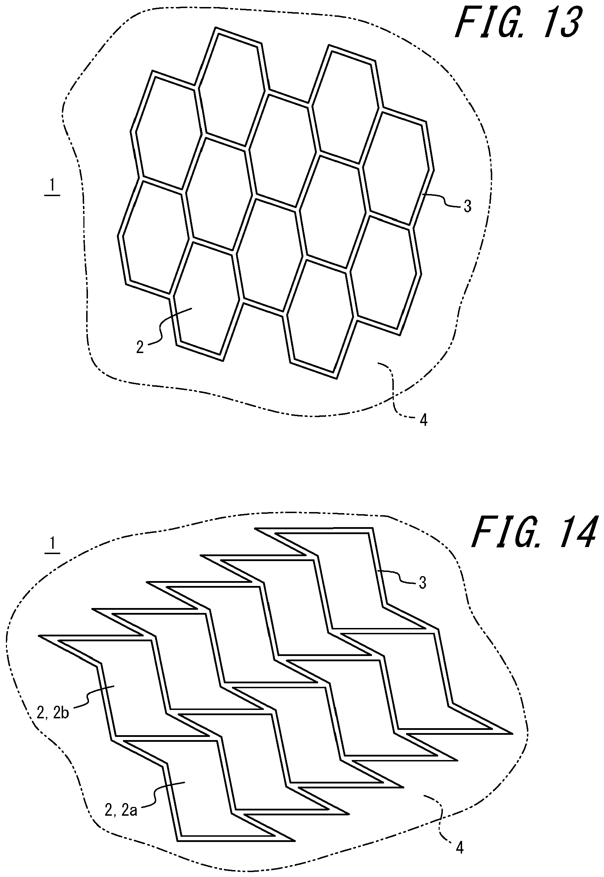

FIG. 13 is an axial cross-sectional view of a bead core according to a tenth embodiment of the present disclosure. A bead core 1 of this embodiment is the annular bead core 1 configured in a state where one or more (one in an illustrated example) bead wires 2 are wound a plurality of times, and have a periphery coated with a bead core coating resin 4. In this example, a cross-sectional shape of the bead wire 2 is a hexagon. In this example, the bead wire 2 is formed in a plurality of columns in an axial direction of the bead core 1 and in a plurality of stacks in a radial direction. In this example, the bead wire 2 is formed in five columns in the axial direction of the bead core 1, and formed in two stacks in a central column and both end columns and in three stacks in intermediate columns between the central column and both the end columns, respectively. As illustrated in FIG. 13, in axial cross-sectional view of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). The bead wires 2 adjacent in the axial direction and radial direction of the bead core 1 are joined to each other, for example, by welding (e.g., heat welding) or bonding the surrounding resin materials 3 to each other. The bead core 1 illustrated in FIG. 13 may have, for example, another configuration where two bead wires 2 adjacent in the axial direction are wound in three columns in the axial direction and two stacks in the radial direction, respectively.

FIG. 14 is an axial cross-sectional view of a bead core according to an eleventh embodiment of the present disclosure. A bead core 1 of this embodiment is the annular bead core 1 configured in a state where one or more (two in an illustrated example) bead wires 2 are wound a plurality of times, respectively, and have a periphery coated with a bead core coating resin 4. In this example, a cross-sectional shape of the bead wire 2 is a non-protruding hexagon (a hexagon having an inner angle in excess of 180°). In this example, the bead wire 2 is formed in a plurality of columns (five columns in this example) in an axial direction of the bead core 1 and in a plurality of stacks (two stacks in this example) in a radial direction. In this example, the bead core 1 is configured in a state where two bead wires 2a and 2b are wound. That is, the bead core 1 is configured in a state where a set of the bead wire 2a and the bead wire 2b that are adjacent in the radial direction of the bead core 1 is wound. As illustrated in FIG. 14, in cross-sectional view including an axis of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). The bead wires 2 adjacent in the axial direction and radial direction of the bead core 1 are joined to each other, for example, by welding (e.g., heat welding) or bonding the surrounding resin materials 3 to each other. Note that bead core 1 illustrated in FIG. 14 may have a configuration where one bead wire 2 is wound in the axial direction and the radial direction.

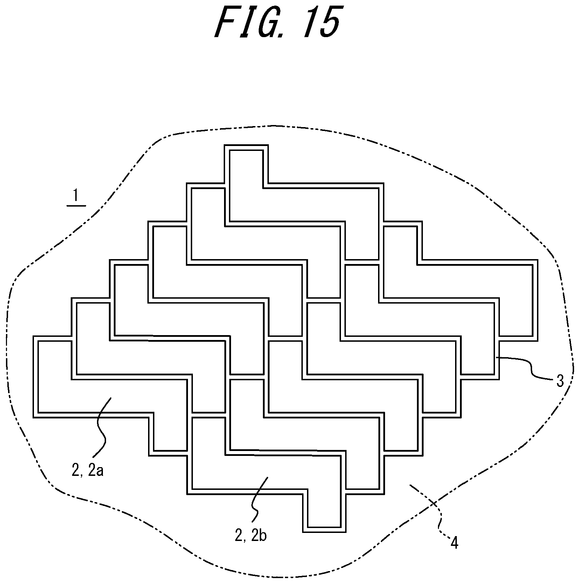

FIG. 15 is an axial cross-sectional view of a bead core according to a twelfth embodiment of the present disclosure. A bead core 1 of this embodiment is the annular bead core 1 configured in a state where one or more (two in an illustrated example) bead wires 2 are wound a plurality of times, and have a periphery coated with a bead core coating resin 4. In this example, a cross-sectional shape of the bead wire 2 is a non-protruding octagon (an octagon having an inner angle in excess of 180°). In this example, the bead core 1 is configured in a state where two bead wires 2 are wound. In this example, the bead wire 2 is formed in a plurality of columns (two columns in this example) in an axial direction of the bead core 1 and in a plurality of stacks (six stacks in this example) in a radial direction. That is, the bead core is configured in a state where a set of a bead wire 2a and a bead wire 2b that are adjacent in the axial direction of the bead core 1 is wound. As illustrated in FIG. 15, in cross-sectional view including an axis of the bead core 1, the bead wire 2 has a periphery coated with a resin material 3, and the resin material 3 is interposed between the bead wires 2. Therefore, a plurality of bead wires 2 have an entire periphery coated with the resin material 3, and the resin material 3 is interposed between the respective bead wires 2. Furthermore, in the axial cross-sectional view of the bead core 1, the resin material 3 interposed between the bead wires 2 superimposed on and adjacent to each other in the axial direction of the bead core 1 has a thickness in the axial direction that is almost constant in at least a part of a superimposed region (all the region in the illustrated example). Similarly, in the axial cross-sectional view of the bead core 1, the resin material 3 interposed between the bead wires 2 superimposed on and adjacent to each other in the radial direction of the bead core 1 has a thickness in the radial direction that is almost constant in at least a part of a superimposed region (all the region in the illustrated example). The bead wires 2 adjacent in the axial direction and radial direction of the bead core 1 are joined to each other, for example, by welding (e.g., heat welding) or bonding the surrounding resin materials 3 to each other.

According to the bead cores 1 of the first to twelfth embodiments, the cross-sectional shape of the bead wire 2 is non-circular (the parallelogram in the first, second, and fourth embodiments, the rhombic shape in the third embodiment, the trapezoid in the fifth and sixth embodiments, the triangle in the seventh and eighth embodiments, the hexagon in the ninth to eleventh embodiments, and the octagon in the twelfth embodiment), so that the adjacent bead wires 2 come in linear contact with each other via the resin material 3 (linearly exert force to each other). Furthermore, in the axial cross-sectional view of the bead core 1, the bead wire 2 is fixed by the resin material 3 interposed around each orbital portion of the bead wire 2. Consequently, even in a case where a shearing force or the like is applied to the bead core 1, the shape is hard to be collapsed, and the bead core 1 has an excellent shape retaining property. Furthermore, it is not necessary to provide a fixed region in a circumferential direction of the bead core 1, and hence, uniformity in the circumferential direction of the tire is not impaired when the bead core 1 is incorporated in the tire. Consequently, each of the bead cores 1 of the first to twelfth embodiments does not impair the uniformity in the circumferential direction of the tire when incorporated in the tire, and also has the excellent shape retaining property. Furthermore, in the first to twelfth embodiments, the periphery of the wound bead wire 2 coated with the resin material 3 is further coated with the bead core coating resin 4, and hence, a shape stability of the bead wire 2 can improve.

In the present disclosure, it is preferable that the cross-sectional shape of the bead wire 2 is polygonal. The adjacent bead wires 2 further come in linear contact with each other via the resin material 3 (further linearly exert the force to each other), and hence, the shape retaining property of the bead core 1 can further improve. For a similar reason, it is preferable that the cross-sectional shape of the bead wire 2 is triangular, quadrangular, hexagonal or octagonal. For the similar reason, it is preferable that the cross-sectional shape of the bead wire 2 is non-elliptic.

In the present disclosure, it is preferable that in the axial cross-sectional view of the bead core 1, the resin material 3 interposed between the bead wires 2 superimposed on and adjacent to each other in the axial direction of the bead core 1 has the thickness in the axial direction that is almost constant in at least a part of the superimposed region. Similarly, in the present disclosure, it is preferable that in the axial cross-sectional view of the bead core 1, the resin material 3 interposed between the bead wires 2 superimposed on and adjacent to each other in the radial direction of the bead core 1 has the thickness in the radial direction that is almost constant in at least a part of the superimposed region. The resin material 3 interposed between the bead wires 2 is formed in a minimum thickness to fix the bead wire 2 so that the thickness is almost constant, so that a weight of the bead core 1 can be reduced. For example, in a case where the cross-sectional shape of the bead wire 2 is circular, the thickness of the resin material 3 increases from the minimum thickness as being away from a position where the bead wires come in point contact with each other via the resin material (exert the force to each other at a point). Consequently, as compared with such a case, the entire thickness of the resin material 3 does not have to be increased.

FIG. 16 is a schematic side view to explain an annular body that forms the bead core according to an embodiment of the present disclosure. FIG. 16 only illustrates the bead wire 2 for simplicity, and omits depiction of the resin material 3. In FIG. 16, a point O is a central axis of the bead core 1. As illustrated in FIG. 16, the bead wire 2 is wound from a winding start end E1 spirally in this cross-sectional view. As described above, F1, F2 and F3 are the orbital portions, and in this example, a winding end edge E2 extends further than at least the point F3. Therefore, in this example, the bead wire 2 is stacked in three or more stacks when seen at an arbitrary radial position. There are not any special restrictions on a length (an overlap length) of the bead wire 2 from the orbital position (in this example, the point F3) located closest to a winding end edge E2 side to the winding end edge (in this example, the point E2). For example, the length can be from 1/200 to 199/200 of an orbital distance from the point F2 to the point F3. When the length is 1/200 or more of the orbital distance, an area where the coating resins come in contact with each other can increase between the bead wires 2 adjacent in the radial direction (a stack direction). Consequently, for example, adhesiveness or a welding force can be increased, and a tensile burden can be decreased. On the other hand, when the length is 199/200 or less of the orbital distance, the bead core can have a reduced weight. For similar reasons, the overlap length is preferably from 1/100 to 2/3 of the orbital distance from the point F2 to the point F3, and more preferably from 1/50 to 1/3 of the orbital distance from the point F2 to the point F3.

### <Manufacturing Method of Bead Core>

The manufacturing method of the bead core according to an embodiment of the present disclosure includes a winding step of winding a plurality of times one or more resin-coated wires each comprising one bead wire 2 having a non-circular cross-sectional shape and being coated with the resin material 3 so that a plurality of columns are formed in an axial direction and a plurality of stacks are formed in a radial direction in axial (the axial direction of the bead core 1 obtainable by the present manufacturing method is meant, and this also applies to the following) cross-sectional view of the bead core 1, and a joining step of joining the resin materials 3 of the adjacently wound resin-coated wires to each other. The joining step may be performed after the winding step or can be performed simultaneously with the winding step. Thereafter, a step of coating the bead core with the bead core coating resin 4 by injection molding or the like is performed. Hereinafter, illustration and description will be made as to embodiments of the manufacturing method of the bead core of the present disclosure to obtain the bead core 1 of the present disclosure according to the above described first to twelfth embodiments. Note that the step of coating the bead core with the bead core coating resin 4 by the injection molding or the like is common, and hence, description thereof is omitted.

In the first embodiment illustrated in FIG. 1, the above winding step can be performed by winding one resin-coated wire in three columns in the axial direction of the bead core 1 and in three stacks in the radial direction. Specifically, the one resin-coated wire is stacked in three stacks in the radial direction from a right side of the first stack on a paper surface. Next, the wire can be stacked from the first stack to the third stack of the adjacent column (a second column), and stacked from a first stack to a third stack of a third column. In the winding step, in this cross-sectional view, operability can be acquired so that a shape of a recess portion divided by the resin-coated wire does not have an acute angle. Hereinafter, also in the other embodiments, it is preferable that in the winding step, the shape of the recess portion divided by the resin-coated wire does not have the acute angle in this cross-sectional view. In view of the operability, it is preferable that the joining step is performed simultaneously with the winding step by winding the resin-coated wire while melting the resin material 3, for example, with hot air, or winding the resin-coated wire while applying an adhesive to the resin material 3. On the other hand, the joining step may be performed, for example, by melting the resin material 3 with the hot air and solidifying the material after the winding step.

In the second embodiment illustrated in FIG. 5, the above winding step can be performed by winding one resin-coated wire in four columns in the axial direction of the bead core 1 and in three stacks in the radial direction. Specifically, the one resin-coated wire is stacked in three stacks in the radial direction from a right side of a first stack on the paper surface. Next, the wire can be stacked from a first stack to a third stack of an adjacent column (a second column) in the axial direction, stacked from a first stack to a third stack of a third column, and stacked from a first stack to a third stack of a fourth column. In the winding step, in this cross-sectional view, operability can be acquired so that a shape of a recess portion divided by the resin-coated wire does not have an acute angle. Hereinafter, also in the other embodiments, it is preferable that in the winding step, the shape of the recess portion divided by the resin-coated wire does not have the acute angle in this cross-sectional view. In view of the operability, it is preferable that the joining step is performed simultaneously with the winding step by winding the resin-coated wire while melting the resin material 3, for example, with hot air, or winding the resin-coated wire while applying an adhesive to the resin material 3. On the other hand, the joining step may be performed, for example, by melting the resin material 3 with the hot air and solidifying the material after the winding step.

In the third embodiment illustrated in FIG. 6, the above winding step can be performed, for example, by winding one resin-coated wire in a first stack (a central column), a second stack (an intermediate column (one side in an axial direction), and another intermediate column (the other side in the axial direction)), a third stack (an end column (the other side in the axial direction), the central column, and another end column (one side in the axial direction)), a fourth stack (the intermediate column (the one side in the axial direction), and the intermediate column (the other side in the axial direction)), and a fifth stack (the central column) in order. The joining step is similar to that of the first embodiment illustrated in FIG. 1.

In the fourth embodiment illustrated in FIG. 7, it is preferable to wind using three resin-coated wires. For example, the above winding step can be performed by using and winding the resin-coated wire obtainable by coating, with the resin, the bead wire having the cross-sectional shape that is the above first parallelogram in a first stack from a right side of a paper surface and in four columns in a column direction, using and winding the resin-coated wire obtainable by coating, with the resin, the bead wire having the cross-sectional shape that is the above second parallelogram in a second stack from a left side of the paper surface and in four columns in the column direction, and using and winding the resin-coated wire obtainable by coating, with the resin, the bead wire having the cross-sectional shape that is the above first parallelogram in a third stack from the right side of the paper surface and in four columns in the column direction. Also in the present embodiment, the joining step may be performed after the winding step or can be performed simultaneously with the winding step. Here, the joining step can include joining three resin-coated wires to one another. Note that in case of using six bead wires 2, the above winding step can be performed by winding a set of two resin-coated wires together from the right side of the paper surface in the first stack and as much as two columns (four columns in total), winding another set of two resin-coated wires together from the left side of the paper surface in the second stack and as much as two columns (four columns in total), and further winding still another set of two resin-coated wires together from the right side of the paper surface in the third stack and as much as two columns (four columns in total). The joining step may be performed after the winding step or can be performed simultaneously with the winding step. Here, the joining step can include joining six resin-coated wires to one another.

In the fifth embodiment illustrated in FIG. 8, it is preferable to use two resin-coated wires, i.e., a first resin-coated wire comprising the bead wire 2a having the above first trapezoid as the cross-sectional shape and coated with the resin, and a second resin-coated wire comprising the bead wire 2b having the above second trapezoid as the cross-sectional shape and coated with the resin. Furthermore, the above winding step can be performed, for example, by winding a set of the first and second resin-coated wires arranged in the axial direction of the bead core 1 in three stacks in the radial direction in a right column of the paper surface, moving as much as one column in the column direction, and then winding in three stacks in the radial direction in a left column of the paper surface. Also in the present embodiment, the joining step may be performed after the winding step or can be performed simultaneously with the winding step. The above set of first and second resin-coated wires can be joined prior to the winding step, or may be joined after the winding step or joined simultaneously with the winding step. Note that in case of using four bead wires 2, the above winding step can be performed by winding and stacking the four resin-coated wires, respectively, in the radial direction. The joining step may be performed after the winding step or can be performed simultaneously with the winding step.

In the sixth embodiment illustrated in FIG. 9, it is preferable to use six resin-coated wires in total including three first resin-coated wires each comprising the bead wire 2a having the above first trapezoid as the cross-sectional shape and coated with the resin, and three second resin-coated wires each comprising the bead wire 2b having the above second trapezoid as the cross-sectional shape and coated with the resin. Furthermore, the above winding step can be performed, for example, by winding a set of first and second resin-coated wires arranged in the axial direction of the bead core 1 in two columns (four columns in total) in the axial direction from a right column of the paper surface in a first stack, winding another set of first and second resin-coated wires in two columns (four columns in total) in the axial direction from a left column of the paper surface in a second stack, and then winding still another set of first and second resin-coated wires in two columns (four columns in total) in the axial direction from the right column of the paper surface in a third stack. Also in this case, the joining step may be performed after the winding step or can be performed simultaneously with the winding step in the same manner as described above. The above set of first and second resin-coated wires can be joined prior to the winding step, or may be joined after the winding step or joined simultaneously with the winding step.

In the seventh embodiment illustrated in FIG. 10, it is preferable to use two resin-coated wires including a first resin-coated wire comprising the bead wire 2a having the above first triangle as the cross-sectional shape and coated with the resin and a second resin-coated wire comprising the bead wire 2b having the above second triangle as the cross-sectional shape and coated with the resin. Furthermore, the above winding step can be performed, for example, by winding a set of first and second resin-coated wires arranged in the axial direction of the bead core 1 in three columns (six columns in total) in the axial direction from a right side of the paper surface in a first stack, winding the set in three columns (six columns in total) in the axial direction from a left side of the paper surface in a second stack, and then winding the set in three columns (six columns in total) on one side in the axial direction from the right side of the paper surface in a third stack. Also in this case, the joining step may be performed after the winding step or can be performed simultaneously with the winding step in the same manner as described above. The above set of first and second resin-coated wires can be joined prior to the winding step, or may be joined after the winding step or joined simultaneously with the winding step.

In the eighth embodiment illustrated in FIG. 11, it is preferable to use six resin-coated wires in total including three first resin-coated wires each comprising the bead wire 2a having the above first triangle as the cross-sectional shape and coated with the resin, and three second resin-coated wires each comprising the bead wire 2b having the above second triangle as the cross-sectional shape and coated with the resin. Furthermore, the above winding step can be performed, for example, by winding a set of first and second resin-coated wires arranged in the axial direction of the bead core 1 in three columns in the axial direction in a first stack, winding another set of first and second resin-coated wires in three columns in the axial direction in a second stack, and then winding still another set of first and second resin-coated wires in three columns in the axial direction in a third stack. Also in this case, the joining step may be performed after the winding step or can be performed simultaneously with the winding step in the same manner as described above. The above set of first and second resin-coated wires can be joined prior to the winding step, or may be joined after the winding step or joined simultaneously with the winding step.

In the ninth embodiment illustrated in FIG. 12, the above winding step can be performed, for example, by winding a resin-coated wire comprising one bead wire 2 having the regular hexagon as the cross-sectional shape and coated with the resin in a first stack (an end column (one side in the axial direction), a central column, and an end column (the other side in the axial direction)), a second stack (an intermediate column (the other side in the axial direction) and an intermediate column (the one side in the axial direction)), a third stack (an end column (the one side in the axial direction), a central column, and an end column (the other side in the axial direction)), a fourth stack (an intermediate column (the other side in the axial direction), and an intermediate column (the one side in the axial direction)), and a fifth stack (an end column (the one side in the axial direction), a central column, and an end column (the other side in the axial direction)), and similarly in sixth and seventh stacks in order. Alternatively, the above winding step can be performed by stacking a first column, stacking an adjacent second column, stacking an adjacent third column, and similarly stacking in fourth and fifth columns, and winding in this order. Also in this case, the joining step may be performed after the winding step or can be performed simultaneously with the winding step in the same manner as described above.

In the tenth embodiment illustrated in FIG. 13, the above winding step can be performed, for example, by winding a resin-coated wire comprising one bead wire 2 having the hexagon as the cross-sectional shape and coated with the resin in a first stack (an intermediate column (one side in the axial direction), and an intermediate column (the other side in the axial direction)), a second stack (an end column (the other side in the axial direction), a central column, and an end column (the one side in the axial direction)), a third stack (an intermediate column (the one side in the axial direction), and an intermediate column (the other side in the axial direction)), a fourth stack (an end column (the other side in the axial direction), a central column, and an end column (the one side in the axial direction)), and a fifth stack (an intermediate column (the one side in the axial direction), and an intermediate column (the other side in the axial direction)) in order. Also in this case, the joining step may be performed after the winding step or can be performed simultaneously with the winding step in the same manner as described above. Note that in case of using two bead wires 2, the above winding step can be performed, for example, by stacking a set of two resin-coated wires in two stacks in a first column on a left side of a paper surface, stacking two stacks in an adjacent second column, and further stacking two stacks in an adjacent third column. The joining step may be performed after the winding step or can be performed simultaneously with the winding step.

In the eleventh embodiment illustrated in FIG. 14, it is preferable to use, for example, two resin-coated wires in total comprising bead wires 2a and 2b each having a non-protruding hexagonal cross section and coated with the resin. Then, the above winding step can be performed by arranging two resin-coated wires in the radial direction of the bead core 1 and forming each wire in five columns in the axial direction. Note that the bead core 1 of the embodiment illustrated in FIG. 14 may be manufactured by using and winding one resin-coated wire comprising the bead wire 2 having the non-protruding hexagonal cross section and coated with the resin in the axial direction and the radial direction. However, if two wires are simultaneously wound as described above, productivity can improve. Also in this case, the joining step may be performed after the winding step or can be performed simultaneously with the winding step in the same manner as described above. The above set of first and second resin-coated wires can be joined prior to the winding step, or may be joined after the winding step or joined simultaneously with the winding step.

In the twelfth embodiment illustrated in FIG. 15, it is preferable to use, for example, two resin-coated wires in total comprising bead wires 2a and 2b each having a non-protruding octagonal cross section and coated with the resin. Then, the above winding step can be performed by arranging two resin-coated wires in the axial direction of the bead core 1 and forming each wire in six stacks in the radial direction. Note that the bead core 1 of the embodiment illustrated in FIG. 15 may be manufactured by using and winding one resin-coated wire comprising the bead wire 2 having the non-protruding octagonal cross section and coated with the resin in the axial direction and the radial direction. However, if two wires are simultaneously wound as described above, productivity can improve. Also in this case, the joining step may be performed after the winding step or can be performed simultaneously with the winding step in the same manner as described above. The above set of first and second resin-coated wires can be joined prior to the winding step, or may be joined after the winding step or joined simultaneously with the winding step.

According to the above described manufacturing method of the bead core of each embodiment, there is obtainable the bead core that does not impair uniformity in the circumferential direction of the tire when incorporated in the tire, and that has an excellent shape retaining property. Note that a winding method different from that of each of the above described embodiments can be performed in a structurally possible range of a desired bead core. For example, in the embodiment illustrated in FIG. 15, three bead wires 2 may be used, and a set of three resin-coated wires may be wound in two columns in the axial direction and two stacks in the radial direction. Alternatively, four bead wires 2 may be used, and a set of four resin-coated wires of two columns × two stacks can be wound in three stacks in the radial direction. Alternatively, six bead wires 2 may be used, and a set of six resin-coated wires of one column × six stacks can be formed in two columns in the axial direction.

There are not any special restrictions on a pneumatic tire including the bead core according to an embodiment of the present disclosure in each bead portion, but the tire can have, for example, a structure illustrated in FIG. 1. Furthermore, there are not any special restrictions, but a portion other than the above described bead core in the pneumatic tire can be manufactured by using a rubber, and the pneumatic tire can be manufactured through a vulcanizing step by use of the bead core of the above embodiment and a non-vulcanized rubber.

Alternatively, a pneumatic tire having a tire structure in which a resin is used in a framework of the tire can be manufactured. A mold including a cavity having a shape corresponding to a tire framework shape is used, and the above described bead core is fixed to a portion of a mold which corresponds to the bead portion by use of a jig or the like. The resin is poured into the cavity of the mold, to perform injection molding. Then, the non-vulcanized rubber is attached to a region such as a tread portion where a rubber member is used, and the pneumatic tire can be manufactured through the vulcanizing step.

According to this pneumatic tire, a steering stability can be improved without impairing uniformity in the circumferential direction.

As above, the embodiments of the present disclosure have been described, but the present disclosure is not limited to the above embodiments. For example, in the above example, it has been described that the cross-sectional shape of the bead wire 2 is the equilateral triangle or the isosceles trapezoid, but the cross-sectional shape may be a triangle other than the equilateral triangle or a trapezoid other than the isosceles trapezoid. Furthermore, as illustrated in the above embodiments, the cross-sectional shape of the whole bead core 1 can be various in accordance with the cross-sectional shape of the bead wire 2 and adjustment of a column number and a stack number.

### REFERENCE SIGNS LIST

- 1: bead core
- 2, 2a, and 2b: bead wire
- 3: resin material
- 4: bead core coating resin
- 10: pneumatic tire
- 11: bead portion
- 12: carcass
- 13: belt
- 14: tread portion
- 15: bead filler

## Claims

1. A bead core that is an annular bead core configured in a state where one or more bead wires are wound a plurality of times, wherein a cross-sectional shape of the bead wire is non-circular,
in axial cross-sectional view of the bead core, the bead wire is formed in a plurality of columns in an axial direction of the bead core and a plurality of stacks in a radial direction of the bead core, and
in the axial cross-sectional view of the bead core, the bead wire has a periphery coated with a resin material, and the resin material is interposed between the bead wires.

2. The bead core according to claim 1, wherein the cross-sectional shape of the bead wire is polygonal.

3. The bead core according to claim 2, wherein the cross-sectional shape of the bead wire is triangular, quadrangular, hexagonal, or octagonal.

4. The bead core according to claim 3, wherein in the axial cross-sectional view of the bead core, the resin material interposed between the bead wires superimposed on and adjacent to each other in the axial direction of the bead core has a thickness in the axial direction that is almost constant in at least a part of the superimposed region.

5. The bead core according to claim 3 or 4, wherein in the axial cross-sectional view of the bead core, the resin material interposed between the bead wires superimposed on and adjacent to each other in the radial direction of the bead core has a thickness in the radial direction that is almost constant in at least a part of the superimposed region.

6. A manufacturing method of a bead core to obtain the bead core according to any one of claims 1 to 5, comprising:
a winding step of winding a plurality of times one or more resin-coated wires each comprising a bead wire having a non-circular cross-sectional shape and being coated with a resin material so that a plurality of columns in an axial direction and a plurality of stacks in a radial direction are formed in axial cross-sectional view of the obtainable bead core, and
a joining step of joining the resin materials of the adjacently wound resin-coated wires to each other.

7. A pneumatic tire comprising:
a pair of bead portions, and
the bead core according to any one of claims 1 to 5 in each of the pair of bead portions.
